# EUROPÄISCHE PATENTSCHRIFT

(11) **EP 2 836 795 B1**
(45) Veröffentlichungstag und Bekanntmachung des Hinweises auf die Patenterteilung: **14.03.2018**
(21) Anmeldenummer: 12780419.3
(22) Anmeldetag: 19.10.2012
(51) Int. Cl.: G01C 21/34

(54) **VERFAHREN, SYSTEM UND FAHRZEUG ZUM DURCHFÜHREN EINER GRUPPENFAHRT**
METHOD, SYSTEM AND VEHICLE FOR CONDUCTING GROUP TRAVEL
PROCÉDÉ, SYSTÈME ET VÉHICULE POUR EFFECTUER UN VOYAGE EN GROUPE

(30) Priorität: 14.04.2012 DE 102012007856
(43) Veröffentlichungstag der Anmeldung: 18.02.2015
(73) Patentinhaber: Audi AG, 85045 Ingolstadt (DE)
(72) Erfinder: PÜHLER, Maximilian, 80799 München (DE); FISCHER, Hubert, 86551 Aichach (DE); SCHERMANN, Michael, 85354 Freising (DE); SCHLACHTBAUER, Tobias, 85375 Neufahrn bei Freising (DE); TRUSCHIN, Sergej, 85748 Garching (DE); WOLF, Thomas, 85635 Siegertsbrunn (DE); KRCMAR, Helmut, 85402 Kranzberg (DE)
(74) Vertreter: Schuster, Simon
(86) Internationale Anmeldenummer: PCT/EP2012/004396
(87) Internationale Veröffentlichungsnummer: WO 2013/152783

(56) Entgegenhaltungen:
- EP-A1- 1 434 032
- EP-B1- 1 681 663
- US-A1- 2008 231 507
- US-A1- 2010 033 347

## Beschreibung

Die vorliegende Erfindung betrifft ein Verfahren zum Durchführen einer Gruppenfahrt, in welcher ein nachfolgender Gruppenfahrtteilnehmer einem vorausfahrenden Gruppenfahrtteilnehmer folgt oder ein aktuelles Fahrtziel des vorausfahrenden Gruppenfahrtteilnehmers ansteuert. Mit Gruppenfahrtteilnehmer wird ein Teilnehmer der Gruppenfahrt bezeichnet. Aus Sicht des Verfahrens können an der Gruppenfahrt grundsätzlich beliebig viele nachfolgende Gruppenfahrtteilnehmer teilnehmen. Im entarteten Fall nimmt an der Gruppenfahrt nur ein Paar von einem vorausfahrenden Gruppenfahrtteilnehmer und genau einem nachfolgenden Gruppenfahrtteilnehmer teil. Grundsätzlich kann jeder der Gruppenfahrtteilnehmer den Dienst (beispielsweise mit einem Smartphone) zu Fuß oder auf einem Zweirad oder in einem beliebigen anderen Verkehrsmittel nutzen. Auch ist im Rahmen einer Gruppenfahrt eine verkehrsmittelübergreifende Nutzung (in Bus, Bahn, Flugzeug, Taxi usw.) möglich.

Außerdem betrifft die Erfindung ein System.

Darüberhinaus betrifft die Erfindung ein Fahrzeug. Das Fahrzeug kann ein Land-, Wasser- oder Luftfahrzeug sein.

Die US 2008/231507 A1 beschreibt einen Ablauf eines Verfahrens zum Navigieren zu einem gemeinsamen dynamischen *Point of Interest.* In einem Schritt werden ein oder mehrere GPS-Kennungen als dynamische *Point of Interests* vergeben. In einem weiteren Schritten werden aktuelle Koordinaten der dynamischen *Point of Interests* ausgetauscht und ein *Point of Interest* als Fahrtziel an andere Navigationsvorrichtungen übermittelt.

Die EP 1434032 A1 beschreibt eine Zentraleinrichtung (center device), die dazu vorgesehen ist, von einem Teilnehmer Positionsangaben und den Namen eines gewünschten Treffpunktes (*meeting place*) entgegenzunehmen. Die Zentraleinrichtung überträgt dann den Namen des Treffpunktes und die zu dem Treffpunkt führende Routeninformation zu mehreren Teilnehmern. Die Zentraleinrichtung kann einen Dienst zum Organisieren von Treffen anbieten.

Die US 2010/033347 A1 beschreibt ein Verkehrsinformationssystem, in welchem eine Fahrzeuggruppenkennung (*vehicle group ID*) verwendet wird.

Die US 6,249,232 B1 beschreibt mehrere Fahrzeuge, die ein Kommunikationsverfahren zwischen Fahrzeugen nutzen, wobei den Fahrzeugen Identifikationsnummern zugeordnet werden, wenn sie ein Identifikationsnummern-Zuordnungsmittels passieren.

Bisher sind nur unzureichende Möglichkeiten bekannt, zu einem Fahrtziel und/oder zu einem Zwischenziel eine gleiche Fahrtroute mit mehreren Fahrzeugen zu fahren, wenn das Fahrtziel oder das Zwischenziel erst während der Fahrt definiert wird oder sich während der Fahrt verändert. Die EP 1 681 663 B1 beschreibt ein Verfahren, in welchem Zielführungsanweisungen für ein nachfolgendes Fahrzeug auf der Grundlage aktueller Positionen eines vorausfahrenden Fahrzeugs und eines nachfolgenden Fahrzeugs berechnet werden. Zur Bildung eines Fahrtverbunds für eine Gruppenfahrt wird von jedem Fahrzeug, das an der Gruppenfahrt teilnehmen soll, eine Anfragenachricht mit einer fahrzeugspezifischen Kennung und Angabe der Position des Fahrzeugs zu einem zentralen Server gesendet. Der Server erkennt die Zusammengehörigkeit eines Fahrtverbunds anhand einer weitgehenden Übereinstimmung der Fahrzeugpositionen.

Bei dem bekannten Verfahren müssen alle Gruppenfahrtteilnehmer die Gruppenfahrt in der Nähe eines gemeinsamen Startpunkts beginnen. Erschwerend kommt hinzu, dass die Gruppenfahrtteilnehmer nicht nur von einem Ort in der Nähe eines gemeinsamen Startpunkts aus starten müssen, sondern dass sie sich dazu in der Nähe des gemeinsamen Startpunkts auch gleichzeitig einfinden müssen. In vielen Situationen ist zumindest eine dieser Randbedingungen nicht annehmbar, beispielsweise dann nicht, wenn die Gruppenfahrtteilnehmer zwar ein gemeinsames Ziel (zum Beispiel einen Treffpunkt für eine Familienfeier oder für eine Vortragsveranstaltung) ansteuern, die Gruppenfahrt aber von zuhause aus oder von unterschiedlichen Firmengeländen aus beginnen wollen, ohne dafür einen Umweg über den Startpunkt des vorausfahrenden Gruppenfahrteilnehmers in Kauf nehmen zu müssen.

Abgesehen davon besteht bei dem bekannten Verfahren eine Verwechslungsgefahr, wenn nicht ausgeschlossen werden kann, dass sich an einem Ort (beispielsweise auf einem Parkplatz eines Flughafen- oder Messegeländes) gleichzeitig mehrere Fahrtgruppen zusammenfinden. Außerdem müssen bei dem bekannten Verfahren zu Fahrtbeginn die Positionen aller Gruppenfahrtteilnehmer zu dem zentralen Server übermittelt werden. Damit besteht für den nachfolgenden Gruppenfahrtteilnehmer das Datenschutzproblem, dass ohne besondere Vorkehrungen nicht auszuschließen ist, dass eine Identität und/oder eine Position des nachfolgenden Gruppenfahrtteilnehmers bei der Übermittlung an den Server oder beim Server abgehört wird. So kann eine weitere Person, die kein Teilnehmer der Gruppenfahrt sein soll, auf diese Weise Kenntnis von einer Identität und/oder einem Aufenthaltsort des nachfolgenden Gruppenfahrtteilnehmers erhalten und in unerwünschter Weise dazu nutzen, festzustellen, wer an der Gruppenfahrt teilnimmt, und/oder dazu nutzen, eine Verfolgung des nachfolgenden Gruppenfahrtteilnehmers aufzunehmen.

Es ist eine Aufgabe der vorliegenden Erfindung, ein Verfahren zum Durchführen einer Gruppenfahrt bereitzustellen, bei dem die Fahrtroute oder ein Ziel für die Gruppenfahrt zumindest den nachfolgenden Gruppenfahrtteilnehmern nicht vor Antritt der Gruppenfahrt bekannt ist und sich die nachfolgenden Gruppenfahrtteilnehmer trotzdem nicht in der Nähe eines gemeinsamen Startpunkts einfinden müssen.

Diese Aufgabe wird erfindungsgemäß durch ein Verfahren gemäß Patentanspruch 1, durch ein System gemäß Patentanspruch 9 und ein Fahrzeug gemäß Anspruch 10 gelöst. Vorteilhafte Weiterbildungen der vorliegenden Erfindungen sind in den Unteransprüchen angegeben.

Erfindungsgemäß wird ein Verfahren zum Durchführen einer Gruppenfahrt bereitgestellt, in welcher ein nachfolgender Gruppenfahrtteilnehmer einem vorausfahrenden Gruppenfahrtteilnehmer folgt oder ein aktuelles Fahrtziel des vorausfahrenden Gruppenfahrtteilnehmers ansteuert, wobei das Verfahren folgende Schritte umfasst:
- Vergeben einer Gruppenfahrtkennung für eine Fahrt des vorausfahrenden Gruppenfahrtteilnehmers;
- Übergeben der Gruppenfahrtkennung von dem vorausfahrenden Gruppenfahrtteilnehmer an den nachfolgenden Gruppenfahrtteilnehmer vor einem Übermitteln einer Navigationsinformation des vorausfahrenden Gruppenfahrtteilnehmers an eine Verteileinheit;
- Übermitteln der Navigationsinformation des vorausfahrenden Gruppenfahrtteilnehmers an die Verteileinheit in einem Kontext zu der Gruppenfahrtkennung, wobei die Gruppenfahrtkennung beim Übermitteln der Navigationsinformation an die Verteileinheit mitübermittelt wird, ohne dass die Verteileinheit außer der Gruppenfahrtkennung eine Identität des vorausfahrenden Gruppenteilnehmers erhält;
- Übermitteln der Navigationsinformation von der Verteileinheit an den nachfolgenden Gruppenfahrtteilnehmer;
- Nutzen der übermittelten Navigationsinformation durch den nachfolgenden Gruppenfahrtteilnehmer.

Der Schritt des Übergebens der Gruppenfahrtkennung von dem vorausfahrenden Gruppenfahrtteilnehmer an den nachfolgenden Gruppenfahrtteilnehmer findet vor dem Übermitteln einer Navigationsinformation des vorausfahrenden Gruppenfahrtteilnehmers an die Verteileinheit statt. Beispielsweise kann ein Verkehrsteilnehmer, der an der Gruppenfahrt zunächst nicht beteiligt ist, von dem vorausfahrenden Gruppenfahrtteilnehmer während der Gruppenfahrt zur Teilnahme an der Gruppenfahrt mittels fernmündlicher Übergabe der Gruppenfahrtkennung eingeladen werden. Eine bevorzugte Ausführungsform sieht vor, dass das Übermitteln der Navigationsinformation von der Verteileinheit an den nachfolgenden Gruppenfahrtteilnehmer als Antwort auf eine Abfragenachricht von dem nachfolgenden Gruppenfahrtteilnehmer an die Verteileinheit stattfindet, wobei die Abfragenachricht die Gruppenfahrtkennung enthält.

In Bezug auf das System wird die Aufgabe dadurch gelöst, dass das System dazu vorbereitet ist, Verfahrensschritte des Verfahrens nach einem der Ansprüche 1 bis 8 auf der Seite des vorausfahrenden Gruppenfahrtteilnehmers und/oder auf der Seite des nachfolgenden Gruppenfahrtteilnehmers und/oder als Verteileinheit und/oder als Register durchzuführen.

In Bezug auf das Fahrzeug wird die Aufgabe dadurch gelöst, dass das Fahrzeug ein erfindungsgemäßes System umfasst.

Mittels der gruppenfahrtspezifischen Gruppenfahrtkennung kann der nachfolgende Gruppenfahrtteilnehmer die Navigationsinformation des vorausfahrenden Gruppenfahrtteilnehmers bei einem Server abrufen oder aus einem Datenstrom (beispielsweise aus einem Datenstrom eines Verteilfunkdienstes) herausfiltern. Im Gegensatz zu dem bekannten Verfahren braucht der Gruppenfahrtteilnehmer für seine Teilnahme an der Gruppenfahrt keine Information über sich selbst preisgeben, noch muss er sich zur Teilnahme an der Gruppenfahrt an einem bestimmten Ort einfinden. Die geringe Komplexität des vorgeschlagenen Verfahrens fördert eine Standardisierbarkeit, so dass auch eine verkehrsträgerübergreifende und/oder herstellerübergreifende Standardisierung und Nutzung des erfindungsgemäßen Verfahrens zur Durchführung einer Gruppenfahrt realisierbar erscheint.

Vorteilhaft ist, wenn das Übermitteln der Navigationsinformation von der Verteileinheit an den nachfolgenden Gruppenfahrtteilnehmer nur stattfindet, wenn zuvor folgender Schritt stattgefunden hat: Übermitteln der Gruppenfahrtkennung durch den nachfolgenden Gruppenfahrtteilnehmer an die Verteileinheit. Hierdurch wird Personen, die zu der Gruppenfahrt nicht eingeladen werden sollen, erschwert, die Navigationsinformationen auszuforschen oder zu nutzen. Der Schritt des Übermittelns einer Navigationsinformation des vorausfahrenden Gruppenfahrtteilnehmers an eine Verteileinheit kann vor, nach oder gleichzeitig mit dem Schritt des Übermittelns der Gruppenfahrtkennung von dem nachfolgenden Gruppenfahrtteilnehmer an die Verteileinheit stattfinden.

Typischerweise umfasst die Navigationsinformation mindestens eine Startposition und/oder mindestens eine aktuelle Position und/oder mindestens ein aktuelles Fahrtziel und/oder mindestens eine aktuelle Fahrtroute des vorausfahrenden Gruppenfahrtteilnehmers. Zweckmäßigerweise wird von dem vorausfahrenden Gruppenfahrtteilnehmer in regelmäßigen zeitlichen Abständen und/oder anlässlich einer Änderung der aktuellen Position um einen vorbestimmten Mindestbetrag und/oder anlässlich einer Änderung der aktuellen Fahrtroute und/oder bei Hinzufügung oder Entfernung eines Zwischenziels eine neue Navigationsinformation an die Verteileinheit übermittelt.

Bevorzugt ist, wenn der vorausfahrende Gruppenfahrtteilnehmer die Gruppenfahrtkennung auf einem anderen Übertragungsweg an den nachfolgenden Gruppenfahrtteilnehmer übermittelt als die Navigationsinformation. Hierdurch kann erreicht werden, dass eine dritte Person, der es gelingt, die Navigationsinformation des vorausfahrenden Gruppenfahrtteilnehmers abzuhören, die Navigationsinformation damit noch nicht dem nachfolgenden Gruppenfahrtteilnehmer zuordnen kann. Hierdurch wird die Information über eine Identität und/oder einen Aufenthaltsort des nachfolgenden Gruppenfahrtteilnehmers geschützt. Für den anderen Übertragungsweg kann ein Verbindungskanal genutzt werden, der mittels Verschleierung oder Verschlüsselung geschützt ist oder ein anderer verfügbarer Dienst, der sich zur Übermittlung von Text- oder Sprachnachrichten eignet. Beispiele hierfür sind Telefonanruf, zweidimensionale Codes, *Near Field Communication,* voice mail, Faksimile, Email, SMS, ein *Instant Messaging Service* (beispielsweise Skype, ICQ), ein soziales Netzwerk (beispielsweise Facebook, Twitter), ein Online-Forum oder ein dafür geeignetes Portal.

Vorteilhaft ist, wenn der vorausfahrende Gruppenfahrtteilnehmer die Gruppenfahrtkennung für die Gruppenfahrt aus einer Grundmenge von möglichen Gruppenfahrtkennungen selbst festlegen kann. Hierdurch ist es beispielsweise möglich, sich auf einer Party auch ohne Zugang zu einem Register unter Verwendung einer frei erfundenen Gruppenfahrtkennung spontan für eine Gruppenfahrt zu verabreden. Es ist besonders vorteilhaft, wenn hierfür statt einer reinen Ziffernfolge auch natürliche Begriffe gewählt werden können, wie 'Hochzeit von Manfred und Irmgard'.

Die Erzeugung oder Auswahl einer Gruppenfahrtkennung mit ausreichender Kennwortstärke kann mit einem Tool unterstützt werden, das beispielsweise auf einem Notebook oder Smartphone einer beliebigen Person als App mitgeführt wird. Es ist nicht erforderlich, dass diese Person Gruppenfahrtteilnehmer ist. Eine bevorzugte Weiterbildung sieht vor, dass das Tool, welches die Erzeugung einer Gruppenfahrtkennung unterstützt, zugleich dafür sorgt, das die erzeugte Gruppenfahrtkennung von Gruppenfahrtteilnehmern ohne technische Hilfsmittel leicht im Kopf behalten werden kann (d.h. ausreichend merkfähig ist).

Diese Überlegungen werden anhand folgender Beispielen näher erläutert. Eine App auf dem Smartphone fragt nach der gewünschten Gruppenfahrtkennung. Ein Gruppenfahrtteilnehmer gibt daraufhin 'Hochzeit von Manfred und Irmgard' ein. Die App prüft die Kennwortstärke, stellt fest, dass die Kennwortstärke ausreichend ist und gibt die gewählte Gruppenfahrtkennung zur Verwendung frei. In einem anderen Fall wird als gewünschte Gruppenfahrtkennung 'Taufe von Kevin' eingegeben. Die App prüft die Kennwortstärke, stellt fest, dass die Kennwortstärke nicht ausreichend ist und fragt dann nach dem Ort, an dem die Taufe stattfinden soll, hängt die Ortsangabe (beispielsweise 'Niederaubach') an die zunächst gewünschte Gruppenfahrtkennung 'Taufe von Kevin' an, prüft die Kennwortstärke, stellt fest, dass die Kennwortstärke nun ausreicht und schlägt als verwendbare Gruppenfahrtkennung 'Taufe von Kevin in Niederaubach' vor.

Eine manuell eingegebene oder maschinell erzeugte Gruppenfahrtkennung kann beispielsweise mittels Near Field Communication zwischen Smartphones übertragen werden. Eine weitere Möglichkeit besteht darin, die Gruppenfahrtkennung auf dem Display des Smartphones anzuzeigen, auf dem es eingegeben oder erzeugt wurde und es mit der Kamera der Smartphones der anderen Gruppenfahrtteilnehmer abzulesen. Auf diese Weise ist auch eine Weitergabe über Smartphones von Personen möglich, die sich an der weiteren Durchführung der Gruppenfahrt sonst nicht beteiligen.

Mittels eines Kontextes, der mit oder in der Gruppenfahrtkennung mitgegeben wird, und Filterung in der Verteileinheit und/oder in dem Navigationssystem des vorausfahrenden und/oder nachfolgenden Gruppenfahrtteilnehmers kann die Nutzung der Gruppenfahrtkennung auf bestimmte Personen und/oder auf Personen, die einer bestimmten Gruppe angehören, eingeschränkt werden.

Besonders bevorzugt ist, wenn mittels eines Registers für Gruppenfahrtkennungen und/oder mittels einer Vergaberegel dafür gesorgt wird, dass eine einmal festgelegte Gruppenfahrtkennung zumindest bis zum Ablauf einer vorbestimmten Schutzzeit zumindest mit hoher Wahrscheinlichkeit keiner anderen Gruppenfahrt irgendeines anderen Verkehrsteilnehmers zugeordnet wird. Hierdurch werden Verwechslungen zwischen unterschiedlichen Gruppenfahrten ausgeschlossen oder zumindest sehr unwahrscheinlich. Das Register kann beispielsweise eine Datenbank sein, die auf einem Server läuft.

Eine Weiterbildung sieht vor, dass das Register dazu vorbereitet ist, auf eine Anfrage des vorausfahrenden Gruppenfahrtteilnehmers für dessen Gruppenfahrt eine Gruppenfahrtkennung zu vergeben und die vergebene Gruppenfahrtkennung an den vorausfahrenden Gruppenfahrtteilnehmer zu übermitteln. Hierdurch wird dem vorausfahrenden Gruppenfahrtteilnehmer die Wahl und Eingabe einer Gruppenfahrtkennung, die eine geringere Verwechslungsgefahr aufweist, erspart.

Insbesondere ist es bevorzugt, wenn die Navigationsinformation und/oder die Gruppenfahrtkennung von oder zu einem Gruppenfahrtteilnehmer nicht zusammen mit einem Bestandteil eines Fahrzeugkennzeichens übermittelt wird und/oder nicht zusammen mit einer Ortsangabe übermittelt wird. Hierdurch wird eine Identifizierung und/oder Ortung mindestens eines der Gruppenfahrtteilnehmer erschwert und ein Datenschutz verbessert.

Die vorliegende Erfindung wird nun anhand der beigefügten Zeichnungen näher erläutert. Dabei zeigen:
- Fig. 1: ein schematisches Beispiel einer aktuellen räumlichen Anordnung von Teilnehmern, Fahrtrouten, Zielen und Zwischenzielen einer Gruppenfahrt;
- Fig. 2: ein schematisches Nachrichtenaustauschdiagramm eines Ausführungsbeispiels eines Verfahrens zum Durchführen einer Gruppenfahrt; und
- Fig. 3: schematisch einen Ablauf eines Verfahrens zum Durchführen einer Gruppenfahrt.

Die nachfolgend näher beschriebenen Ausführungsbeispiele stellen bevorzugte Ausführungsformen der vorliegenden Erfindung dar.

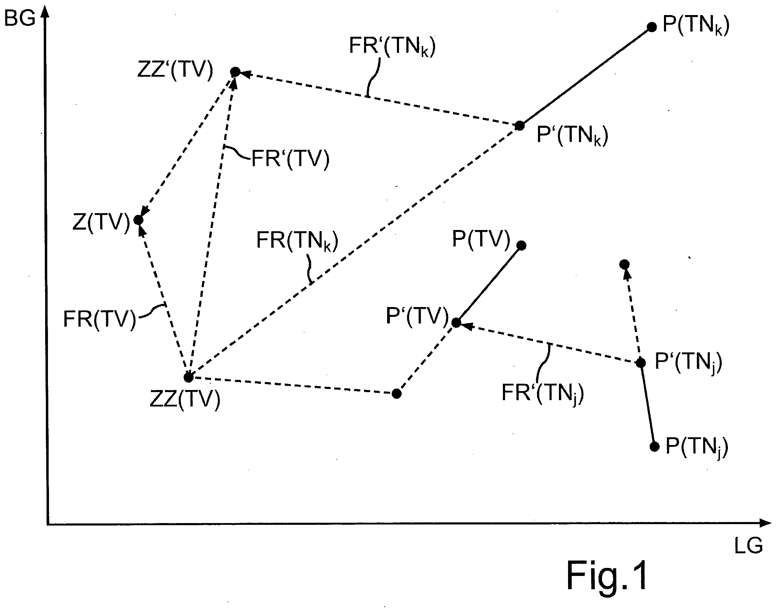

Anhand des zweidimensionalen Diagramms der Fig. 1 mit Längengraden LG und Breitengraden BG wird (zunächst ohne nähere Betrachtung des dafür vorgeschlagenen Nachrichtenaustauschs) ein möglicher Ablauf einer Gruppenfahrt GF erläutert. Das Diagramm zeigt Startpositionen P(TV), P(TNⱼ), P(TNₖ) von einem vorausfahrenden Gruppenfahrtteilnehmer TV und von zwei nachfolgenden Gruppenfahrtteilnehmern TNⱼ, TNₖ. In einer ersten Phase verfolgt der vorausfahrende Gruppenfahrtteilnehmer TV eine erste Fahrtroute FR(TV) zu einem ersten Ziel Z(TV).

Ein erster TNⱼ der beiden nachfolgenden Gruppenfahrtteilnehmer TNⱼ, TNₖ steuert fortlaufend die jeweils zuletzt bekannte aktuelle Position P'(TV) des vorausfahrenden Gruppenfahrtteilnehmers TV an. Der nachfolgende Gruppenfahrtteilnehmer TNⱼ kann dafür ein eigenes Navigationssystem nutzen, das eine Fahrtroute FR(TNⱼ) von seiner aktuellen Position P'(TNⱼ) zu der aktuellen Position P'(TV) des vorausfahrenden Gruppenfahrtteilnehmers TV berechnet und ihm Fahrtempfehlungen anzeigt. Diese Ausführungsform wird vorzugsweise dann angewendet, wenn dem nachfolgenden Gruppenfahrtteilnehmer TNⱼ kein Fahrziel Z(TV) des vorausfahrenden Gruppenfahrtteilnehmers TV mitgeteilt werden soll oder kann. Beispielsweise können auf diese Weise Erkundungsfahrten oder Personenschutzfahrten in einem lockeren Fahrtverbund durchgeführt werden.

In einer bevorzugten Ausführungsform des Verfahrens fährt der nachfolgende Gruppenfahrtteilnehmer eine geplante Route und/oder den tatsächlichen Weg des vorausfahrenden Fahrzeug genau nach. Dies kann von Vorteil sein, wenn die Wegfindung schwierig ist oder wenn der vorausfahrende Gruppenfahrtteilnehmer ortskundig ist und somit einen besseren Weg kennt, beispielsweise um Baustellen und Staus zu umfahren.

Wenn der vorausfahrende Gruppenfahrtteilnehmer TV zur neuen Position P'(TV) gefahren ist, erhält der nachfolgende Gruppenfahrtteilnehmer TNⱼ Kenntnis von dieser neuen Position P'(TV) des vorausfahrenden Gruppenfahrtteilnehmers TV. Die durchgezogenen Linien zeigen diejenigen Teile der Fahrtrouten FR(TV), FR(TNₖ), FR(TNⱼ), die bis zu diesem Zeitpunkt zurückgelegten wurden. Die gestrichelten Linien zeigen diejenigen Teile der Fahrtrouten FR(TV), FR(TNₖ), FR(TNⱼ) und FR'(TV), FR'(TNₖ), FR'(TNⱼ), die bis zu diesem Zeitpunkt geplant, aber noch nicht zurückgelegt wurden. Da sich der nachfolgende Gruppenfahrtteilnehmer TN inzwischen zu der neuen Position P'(TNᵢ) bewegt hat, berechnet das Navigationssystem des nachfolgenden Gruppenfahrtteilnehmers TNⱼ nun für den nachfolgenden Gruppenfahrtteilnehmer TNⱼ eine neue Fahrtroute FR'(TNⱼ).

Der andere nachfolgende Gruppenfahrtteilnehmer TNₖ kennt die aktuelle Fahrtroute FR'(TV) des vorausfahrenden Gruppenfahrtteilnehmers TV und steuert einen der folgenden Orte der aktuellen Fahrtroute FR'(TV) des vorausfahrenden Gruppenfahrtteilnehmers TV an: Startpunkt P'(TV) der aktuellen Fahrtroute FR'(TV) des vorausfahrenden Gruppenfahrtteilnehmers TV, aktuelle Position P'(TV) des vorausfahrenden Gruppenfahrtteilnehmers TV, aktuelles Ziel Z'(TV) des vorausfahrenden Gruppenfahrtteilnehmers TV, ein aktuelles Zwischenziel ZZ'(TV) der aktuellen Fahrtroute FR'(TV) des vorausfahrenden Gruppenfahrtteilnehmers TV. Auch dieser nachfolgende Gruppenfahrtteilnehmer TNₖ kann ein eigenes Navigationssystem nutzen, das eine Fahrtroute FR'(TNₖ) von seiner aktuellen Position P'(TNₖ) zu einem der genannten Orte berechnet und ihm entsprechende Fahrtempfehlungen anzeigt.

Wenn sich ein Ziel Z(TV), ein Zwischenziel ZZ(TV) und/oder die Fahrtroute FR(TV) des vorausfahrenden Gruppenfahrtteilnehmer TV ändert, erhält der nachfolgende Gruppenfahrtteilnehmer TNₖ Kenntnis von dem neuen Ziel Z'(TV), dem neuen Zwischenziel ZZ'(TV) und/oder der neuen aktuellen Fahrtroute FR'(TV) des vorausfahrenden Gruppenfahrtteilnehmers TV. Da sich der nachfolgende Gruppenfahrtteilnehmer TNₖ inzwischen zu der neuen Position P'(TNₖ) bewegt hat, berechnet das Navigationssystem des nachfolgenden Gruppenfahrtteilnehmers TNₖ nun eine neue Fahrtroute FR'(TNₖ) für den nachfolgenden Gruppenfahrtteilnehmer TNₖ zu dem neuen Ziel Z'(TV), zu dem neuen Zwischenziel ZZ'(TV) der neuen aktuellen Fahrtroute FR'(TV) des vorausfahrenden Gruppenfahrtteilnehmers TV oder zu dessen aktuellen Position P'(TV). Bei der Auswahl der von dem nachfolgenden Gruppenfahrtteilnehmer TNₖ anzusteuernden neuen Zielposition kann eine Optimierung durchgeführt werden (beispielsweise hinsichtlich Energiebedarf und/oder Zeitbedarf). Bei der Auswahl des von dem nachfolgenden Gruppenfahrtteilnehmer TNₖ anzusteuernden neuen Zielposition können Randbedingungen berücksichtigt werden wie Tonnagebeschränkungen, Fahrzeugabmessungsbeschränkungen, Beschränkungen oder Möglichkeiten zur Benutzung von Fähren, von Fahrzeugverladungen, von moutpflichtigen Wegen und/oder für Gefahrguttransporte. Die von dem nachfolgenden Gruppenfahrtteilnehmer TNₖ anzusteuernde neue Zielposition muss nicht zwingend auf einer Fahrtroute FR(TV), FR'(TV) des vorausfahrenden Gruppenfahrtteilnehmers liegen.

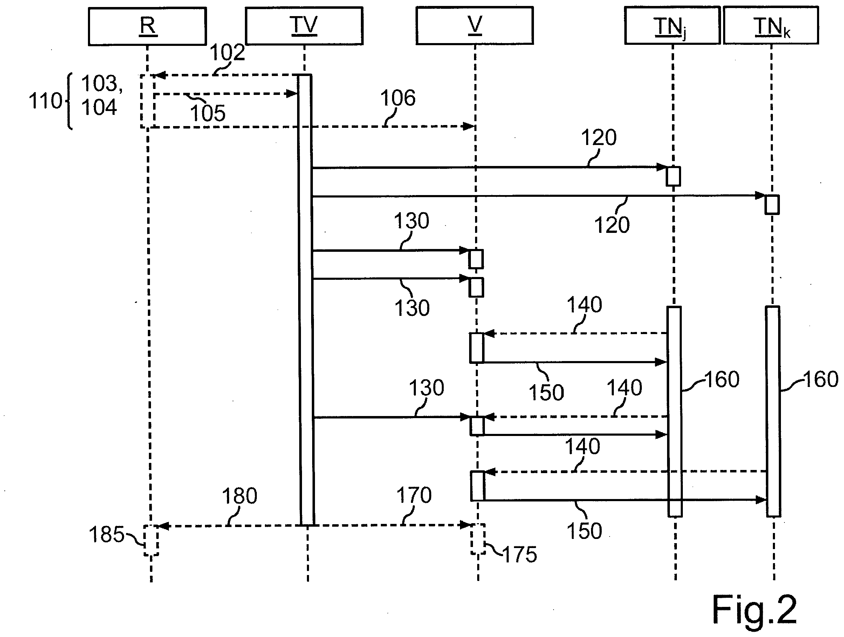

Die Fig. 2 zeigt ein Beispiel für einen möglichen Nachrichtenaustausch zum Durchführen einer Gruppenfahrt GF, wie sie anhand Fig. 1 erläutert wurde. Jede Gruppenfahrt GF benötigt eine Gruppenfahrtkennung K, die die Gruppenfahrt GF von anderen Gruppenfahrten unterscheidbar macht. Die beschriebenen Ausführungsformen unterstellen, dass die Gruppenfahrtkennung K ein temporärer Schlüssel ist, der auch als 'eindeutige temporäre Identität' bezeichnet werden kann. Jede vergebene Gruppenfahrtkennung K sollte mindestens bis zum Ablauf einer Schutzzeit (von beispielsweise zwei Jahren) für keine andere Gruppenfahrt genutzt oder vergeben werden.

Jedoch gibt es auch Anwendungsszenarien, in denen eine Wiederverwendung derselben Gruppenfahrtkennung für verschiedene Fahrten gewollt ist. Beispiel: Eltern im Fußballverein bekommen vom Trainer eine Gruppenfahrtkennung, um dem Trainer bei jedem Auswärtsspiel in einer Kolonne zum Zielort zu folgen.

Für die Erzeugung von Gruppenfahrtkennungen K gibt es viele Möglichkeiten. Beispielsweise kann ein Register R (Verzeichnisdienst) für jeden Verkehrsteilnehmer, der als potentieller vorausfahrender Gruppenfahrtteilnehmer TV in Betracht kommt, eine oder mehrere gruppenfahrtteilnehmerspezifische Gruppenfahrtkennungen GF in einem Prozess 103 auf Vorrat erzeugen. Die auf Vorrat erzeugten gruppenfahrtspezifischen Gruppenfahrtkennungen K können (ähnlich wie eine TAN-Liste) dem potentiellen vorausfahrenden Gruppenfahrtteilnehmer TV mittels einer Übertragung 105 beispielsweise per Email, SMS, über einen *Instant Messaging Service* (wie Skype oder ICQ), über ein soziales Netzwerk (wie *Facebook* oder *Twitter*), über ein Online-Forum, über ein geeignetes Portal oder auf dem Postweg im Klartext oder auf einer Chipkarte übermittelt werden oder in einem Internetdienst zum Download bereitgestellt werden. Dies kann nach Aufforderung (mittels Nachricht 102) durch den vorausfahrenden Gruppenfahrtteilnehmer TV oder auch unaufgefordert, beispielsweise im Rahmen einer Werbeaktion geschehen. Die gestrichelten Linien zeigen optionale Protokolleiemente.

Eine weitere Möglichkeit besteht darin, dass der vorausfahrende Gruppenfahrtteilnehmer TV sich eine Gruppenfahrtkennung K ausdenkt, welche mit hoher Wahrscheinlichkeit von keinem anderen Gruppenfahrtteilnehmer TV verwendet wird. Dies hat den Vorteil, dass für die Vergabe der Gruppenfahrtkennung K kein Gerät benötigt wird und auch keine Verbindung zum Register R zu bestehen braucht. So kann sich der vorausfahrende Gruppenfahrtteilnehmer TV eine anlassbezogene, leicht memorierbare Gruppenfahrtkennung K spontan ausdenken (wie beispielsweise 'Hochzeit von Manfred und Irmgard') und anwesenden Personen, die er zu der Gruppenfahrt GF einladen möchte, die Gruppenfahrtkennung K sofort mitteilen. Dies gelingt auch dann, wenn die Einladung an einem Ort (beispielsweise innerhalb eines Gebäudes) stattfindet, an dem infolge unzureichender Funkversorgung keine Verbindung zu einem Register R hergestellt werden kann. Die Erzeugung oder Auswahl einer Gruppenfahrtkennung K mit ausreichender Kennwortstärke kann mit einem Tool unterstützt werden, das auf einem Smartphone als App mitgeführt wird.

Optional ist es auch möglich, die erdachte Gruppenfahrtkennung K mittels einer Nachricht 102 an ein Register R zwecks Registrierung 104 und/oder zwecks Prüfung 104 auf Verwendbarkeit zu übermitteln. Eine Weiterbildung sieht vor, dass die Registrierung 104 und/oder Prüfung 104 im Erfolgsfall von dem Register R mittels einer Nachricht 105 mit einer Positivquittung PQ beantwortet wird. Eine davon unabhängige Weiterbildung sieht vor, dass die Registrierung 104 und/oder Prüfung 104 im Nichterfolgsfall von dem Register R mittels einer Nachricht 105 mit einer Negativquittung NQ beantwortet wird.

Der vorausfahrende Gruppenfahrtteilnehmer TV übermittelt die Gruppenfahrtkennung K mittels Nachrichten 120 an alle nachfolgenden Gruppenfahrtteilnehmer TNⱼ, TNₖ, die an der Gruppenfahrt GF teilnehmen sollen. Die Gruppenfahrtkennung K kann an die einzuladenden Gruppenfahrtteilnehmer TNⱼ, TNₖ beispielsweise mündlich oder schriftlich in direkter Gegenwart des einzuladenden Gruppenfahrtteilnehmers TNⱼ, TNₖ, fernmündlich, per Voice-Mail, per Email, SMS, per Faksimile, auf dem Postweg im Klartext oder mittels einer Speicherkarte übermittelt oder in einem Internetdienst zum Download bereitgestellt werden. Auch dies kann nach Aufforderung oder auch unaufgefordert, beispielsweise im Rahmen einer Werbeaktion geschehen.

Der vorausfahrende Gruppenfahrtteilnehmer TV übermittelt vor, während oder nach einer von ihm durchgeführten Fahrt mittels einer oder mehrerer Nachrichten 130 eine oder mehrere Navigationsinformationen N an eine Verteileinheit V in einem Kontext zu der Gruppenfahrtkennung K. Die Navigationsinformation N kann beispielsweise mindestens eine Startposition P(TV) und/oder mindestens eine aktuelle Position P'(TV) und/oder mindestens ein aktuelles Fahrtziel Z'(TV) und/oder eine aktuelle Fahrtroute FR'(TV) des vorausfahrenden Gruppenfahrtteilnehmers TV umfassen.

Der Kontext kann beispielsweise darin bestehen, dass bei der Übermittlung 130 der Navigationsinformation N die Gruppenfahrtkennung K mitübermittelt wird. Dies hat den Vorteil, dass es dann nicht erforderlich ist, dass die Verteileinheit V eine irgendwie geartete Identität des vorausfahrenden Gruppenfahrtteilnehmers TV erhält oder überhaupt zwischen unterschiedlichen potentiellen vorausfahrenden Gruppenfahrtteilnehmern TV unterscheiden können muss. Der Schutz der Information über die aktuelle Position P'(TV) des vorausfahrenden Gruppenfahrtteilnehmers TV kann verbessert werden, indem von der Navigationsinformation N die aktuelle Position P'(TV) und vorzugsweise auch einige Positionen, die die aktuelle Position P'(TV) umgeben, ausgenommen und/oder verfälscht werden und/oder deren Weitergabe verzögert wird.

Eine Variante für die Kontextbildung besteht darin, dass der vorausfahrende Gruppenfahrtteilnehmer TV sich mit einer eigenen Teilnehmeridentität (beispielsweise einer MSISDN oder einer IMEI oder einem Konto eines Internetdienstes) bei der Verteileinheit V mittels einer ersten Nachricht 130 anmeldet und dabei die Gruppenfahrtkennung K übermittelt. Wenn der vorausfahrende Gruppenfahrtteilnehmer TV dann bei jeder Übermittlung 130 von Navigationsinformation N die eigene Teilnehmeridentität wiederholt, kann die Verteileinheit V den Kontext zwischen Navigationsinformation N und Gruppenfahrtkennung K auch dann herstellen, wenn die Gruppenfahrtkennung K bei der Übermittlung der Navigationsinformation N nicht mitgeliefert wird. Wenn auf technischem Wege erzwungen wird, dass der vorausfahrende Gruppenfahrtteilnehmer TV sich mit einer eigenen Teilnehmeridentität (beispielsweise MSISDN oder IMEI oder einem Konto eines Internetdienstes) bei der Verteileinheit V anmeldet, besteht ein Vorteil dieser Kontextbildung darin, dass eine Person (beispielsweise ein nachfolgender Gruppenfahrtteilnehmer), die die Gruppenfahrtkennung K kennt, einen vorausfahrenden Gruppenfahrtteilnehmer TV nicht unter derselben Gruppenfahrtkennung K vortäuschen kann, ohne dass dies nachträglich nachweisbar ist. Eine ebenfalls mögliche Weiterbildung sieht vor, dass die Anmeldung der eigenen Teilnehmeridentität im Rahmen der oben erwähnten Registrierung 104 bei dem Register R erfolgt und das Register R den Kontext zwischen Teilnehmeridentität und Gruppenfahrtkennung K mittels einer Nachricht 106 an die Verteileinheit V weiterleitet. Hierdurch kann im Vorhinein unterbunden werden, dass eine Person (beispielsweise ein nachfolgender Gruppenfahrtteilnehmer TNⱼ, TNₖ), die die Gruppenfahrtkennung K kennt, einen vorausfahrenden Gruppenfahrtteilnehmer TV unter der Gruppenfahrtkennung K vortäuschen kann.

Eine davon unabhängige Weiterbildung sieht vor, dass der vorausfahrende Gruppenfahrtteilnehmer TV mittels eines Löschauftrags 170 an die Verteileinheit V eine Löschung 175 von gruppenfahrtspezifischen Daten veranlassen kann, die in der Verteileinheit V gespeichert sind. Alternativ oder zusätzlich kann eine weitere Weiterbildung vorsehen, dass der vorausfahrende Gruppenfahrtteilnehmer TV mittels eines Löschauftrags 180 an das Register R in dem Register R eine Löschung 185 von teilnehmerbezogenen Registrierungsdaten der Gruppenfahrt GF veranlassen kann.

Alternativ oder zusätzlich können beim Register R und/oder bei der Verteileinheit V gespeicherte Daten auch nach einer vorbestimmten Karenzzeit nach Registrierung 104, nach Übermitteln 140 der letzten Positionsabfrage von einem nachfolgenden Gruppenfahrtteilnehmer TN und/oder nach Übermitteln 130 einer letzten Positionsmeldung des vorausfahrenden Gruppenfahrtteilnehmers TV durch Zeitablauf veranlasst gelöscht werden. Auch diese Maßnahme kann zu einer Verbesserung des Schutzes von Standortinformationen P(TV), P'(TV) und/oder Teilnehmerinformationen beitragen.

Zweckmäßig ist es, wenn sich die Verteileinheit V auf einem Server befindet, der sich außerhalb der Fahrzeuge befindet, die der vorausfahrende TV und der nachfolgende TNⱼ, TNₖ Gruppenfahrtteilnehmer für die Gruppenfahrt GF nutzen. Hierdurch kann für alle Gruppenfahrtteilnehmer TV, TNⱼ, TNₖ eine Verteileinheit V mit einer optimalen Dienstqualität bereitgestellt werden. Bei manchen Anwendungen, beispielsweise Einsätzen in Katastrophengebieten oder Manövern im Seegebiet kann es zweckmäßig sein, wenn auch die Verteileinheit V mobil ist. Dazu kann sie sich in einem Fahrzeug befinden, wobei es nicht erforderlich ist, dass das Fahrzeug, in dem sich die Verteileinheit V befindet, von einem der Gruppenfahrtteilnehmer TV, TNⱼ, TNₖ benutzt wird.

Unabhängig davon ist es auch zweckmäßig, wenn sich das Register R auf einem Server befindet, der sich außerhalb der Fahrzeuge befindet, die der vorausfahrende TV und der nachfolgende TNⱼ, TNₖ Gruppenfahrtteilnehmer für die Gruppenfahrt GF nutzen. Hierdurch kann für alle Gruppenfahrtteilnehmer TV, TNⱼ, TNₖ ein Register R mit einer optimalen Dienstqualität bereitgestellt werden. Bei manchen Anwendungen, beispielsweise Einsätzen in Katastrophengebieten oder Manövern im Seegebiet kann es zweckmäßig sein, wenn auch das Register R mobil ist. Dazu kann sie sich in einem Fahrzeug befinden, wobei es nicht erforderlich ist, dass das Fahrzeug mit dem Register R von einem der Gruppenfahrtteilnehmer TV, TNⱼ, TNₖ benutzt wird. Das Register R und die Verteileinheit V können an demselben Ort angeordnet sein. Sie können auch in einem selben Server realisiert sein.

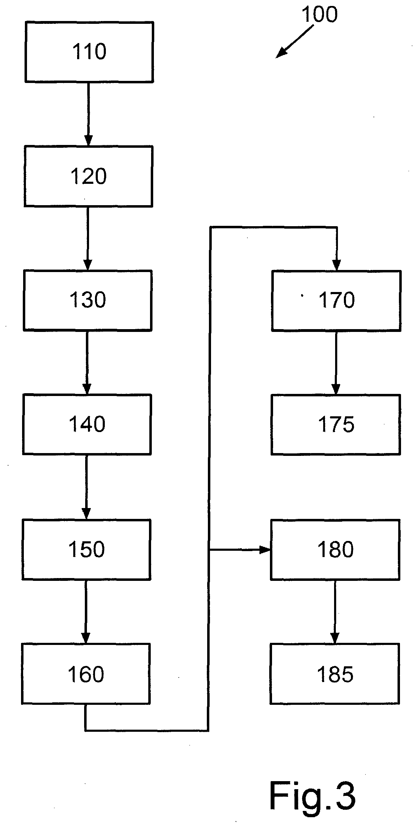

Das in Fig. 3 gezeigte Verfahren 100 zum Durchführen einer Gruppenfahrt, in welcher ein nachfolgender Gruppenfahrtteilnehmer TNⱼ, TNₖ einem vorausfahrenden Gruppenfahrtteilnehmer TV folgt oder ein aktuelles Fahrtziel Z(TV) des vorausfahrenden Gruppenfahrtteilnehmers TV ansteuert, umfasst folgende Schritte. In einem ersten Schritt 110 wird eine Gruppenfahrtkennung K für eine Fahrt des vorausfahrenden Gruppenfahrtteilnehmers TV vergeben. In einem zweiten Schritt 120 wird die Gruppenfahrtkennung K von dem vorausfahrenden Gruppenfahrtteilnehmer TV an den oder die nachfolgenden Gruppenfahrtteilnehmer TNⱼ, TNₖ übergeben. In einem dritten Schritt 130 wird eine Navigationsinformation N des vorausfahrenden Gruppenfahrtteilnehmers TV an eine Verteileinheit V in einem Kontext zu der Gruppenfahrtkennung K übermittelt. In einem vierten Schritt 140 wird die Gruppenfahrtkennung K von dem nachfolgenden Gruppenfahrtteilnehmer TNⱼ, TNₖ an die Verteileinheit V übermittelt. In einem fünften Schritt 150 wird die Navigationsinformation N von der Verteileinheit V an den nachfolgenden Gruppenfahrtteilnehmer TNⱼ, TNₖ übermittelt. In einem sechsten Schritt 160 wird die übermittelte Navigationsinformation N durch den nachfolgenden Gruppenfahrtteilnehmer TNⱼ, TNₖ genutzt.

Wenn in dem fünften Schritt 150 die Navigationsinformation N von der Verteileinheit V an den nachfolgenden Gruppenfahrtteilnehmer TNⱼ, TNₖ mittels eines Broadcast-Dienstes oder über eine für alle potentiellen nachfolgenden Gruppenfahrtteilnehmer zugänglichen Internetdienst erfolgt und die Navigationsinformation von dem nachfolgenden Gruppenfahrtteilnehmer anhand der Gruppenfahrtkennung K aus dem Informationsfluss (beispielsweise aus einer Internetseite) herausgefiltert werden kann, kann auf den vierten Schritt 140 verzichtet werden. Dann ist allerdings bevorzugt, dass die Gruppenfahrtkennung keinen sprechenden Inhalt wie 'Hochzeit von Manfred und Irmgard' enthält.

Im Alltag stellt sich oft die Frage der Lokalisierung einer Person und nach dem genauen Weg zu deren Aufenthaltsort. Ein mögliches Anwendungsszenario ist die Mitteilung des eigenen aktuellen Standorts an Freunde zum leichteren Treffen. Lösungen wie *Google Latitude,* soziale Netzwerke (wie *Facebook* und *Twitter*) oder Applikationen wie *WhatsApp* für aktuelle Smartphones mit Apples iOS oder *Googles* Betriebssystem *Android* werden diesen Anforderungen meistens gerecht, eignen sich allerdings nicht für folgende Einsatzszenarien.

Wenn man in einem Konvoi fährt und nur der Fahrer des Vorderwagens den Weg kennt, so dürfen die nachfolgenden Gruppenfahrtteilnehmer den vorausfahrenden Gruppenfahrtteilnehmer nicht aus den Augen verlieren oder müssen zumindest auf anderem Wege, beispielsweise mittels Mobilfunk erfahren, wie der vorausfahrende Gruppenfahrtteilnehmer gefahren ist. Unter Umständen ist es auch wichtig, genau die gleiche Fahrtroute FR nachzufahren. Da sich solche Situationen spontan ergeben können, kann nicht unterstellt werden, dass alle Mitglieder des Konvois über ein soziales Netzwerk oder eine ähnliche Plattform miteinander verbunden ist. Trotzdem soll ein spontanes Nachfahren möglich sein.

Im Folgenden werden Beispiele für bekannte Dienste aufgelistet, die zum Lokalisieren von anderen Personen verwendet werden können:
- *Google Latitude* ist ein ortsbezogener Dienst für Smartphones zur Freigabe einer eigenen Position an andere Nutzer des Dienstes. Hierbei ist das Austauschen von Positionen kompliziert, weil eine vorherige Anmeldung bei dem Dienst erforderlich ist und zudem eine explizite Zustimmung der beteiligten Personen vorliegen muss.
- *WhatsApp Messenger* ist eine ortsbezogene Applikation für Smartphones, die eine zu *Google Latitude* ähnliche Funktionalität bietet. Hierbei erfolgt die Mitteilung und die Darstellung der eigenen Position auf einer Karte nicht dynamisch und muss daher jedes Mal vom Benutzer initiiert werden.
- *Twitter, Facebook* und andere soziale Netzwerke erlauben es ihren Benutzern, ihren aktuellen Standort über ein Statusupdate mitzuteilen. Somit wird diese Information auch an Personen mitgeteilt, die den aktuellen Standort nicht erfahren sollen oder daran nicht interessiert sind.

Alle bekannten Lösungen auf diesem Gebiet haben für das anhand Fig. 1 beschriebene Anwendungsszenario folgenden Nachteile. Vor der Nutzung muss eine Anmeldung bei dem Dienst erfolgen, und es müssen Kontaktinformationen ausgetauscht werden ("Freunde werden"). Somit ist keine spontane Verwendbarkeit gegeben. Die Freigabe des Standorts muss beispielsweise bei *WhatsApp* oder den sozialen Netzwerken wie *Facebook* jedes Mal vom Benutzer initiiert werden und umfasst nur den zu diesem Zeitpunkt aktuellen Standort. Es findet keine dynamische Aktualisierung/Mitteilung des Standorts statt. Bei manchen Lösungen hat das Freigeben des eigenen Standorts für andere zur Folge, dass diese Freigabe dauerhaft besteht. Somit ist die Möglichkeit für unerwünschtes Nachverfolgen gegeben. Nur die Aufgabe der Freundschaft in dem Netzwerk oder das Sperren des jeweiligen Benutzers unterbindet die ständige Bekanntgabe des Standorts. Es können zwar dynamisch Fahrtrouten zur verfolgten Person erstellt werden. Es lässt sich aber in keiner Weise nachvollziehen, wie eine Person (bzw. das Fahrzeug) gegangen/gefahren ist. Dies ist aber insbesondere dann nützlich, wenn der Vorausfahrende ortskundig ist und einen besonders guten Weg kennt.

Mit der vorliegenden Erfindung wird ein Verfahren bereitgestellt, das ein Fahren in einem Konvoi zu einem dynamischen Ziel unterstützt und vereinfacht. Unter einem Konvoi kann ein Verband von Fahrzeugen verstanden werden, die zumindest strecken- und/oder zeitweise eine gemeinsame Reise durchführen. Dementsprechend müssen die Gruppenfahrtteilnehmer TV, TNⱼ, TNₖ nicht notwendigerweise den gleichen Zielort haben. Je nach Anwendungsszenario kann die Übermittlung der Gruppenfahrtkennung K und/oder einer Navigationsinformation N an nachfolgende Gruppenfahrtteilnehmer TNⱼ, TNₖ auch erst im Verlauf einer Gruppenfahrt GF geschehen, die zunächst noch ohne Unterstützung durch das erfindungsgemäße Verfahren 100 begonnen hat. Es ist nicht einmal zwingend, dass die nachfolgenden Gruppenfahrtteilnehmer TNⱼ, TNₖ den vorausfahrenden Gruppenfahrtteilnehmer TV kennen. Stattdessen wird eine Gruppenfahrtkennung K generiert, die an nachfolgende Gruppenfahrtteilnehmer TNⱼ, TNₖ übergeben wird.

Eine bevorzugte Ausführungsform sieht Folgendes vor: Das vorausfahrende Fahrzeug aktualisiert während der Gruppenfahrt GF stetig seine aktuelle Position P'(TV). Die Positionsinformation P'(TV) wird mit der Gruppenfahrtkennung K verknüpft und über verfügbare Kommunikationskanäle einer zentralen Verteileinheit V mitteilt. Die nachfolgenden Gruppenfahrtteilnehmer TNⱼ, TNₖ können bei der Verteileinheit V über die übergebene Gruppenfahrtkennung K die Fahrtroute FR'(TV) des vorausfahrenden Fahrzeugs abfragen und eine von ihrem Navigationssystem abzufahrende Fahrtroute FR'(TNⱼ), FR'(TNₖ) anpassen. Der Sichtkontakt zum führenden vorausfahrenden Fahrzeug ist somit zu keinem Zeitpunkt der Navigation notwendig, da die Fahrer der nachfolgenden Fahrzeuge ganz bequem den Anweisungen ihres jeweiligen Navigationssystems folgen können. Zudem kann der Gebrauch dieses Verfahrens 100 spontan über die Übergabe einer temporär gültigen eindeutigen Gruppenfahrtkennung K erfolgen. Die Gruppenfahrtkennung K ist nur für eine Gruppenfahrt GF gültig. So wird ein Schutz der Standortinformation der Gruppenfahrtteilnehmer TV, TNⱼ, TNₖ verbessert, weil es einem potentiellen Angreifer damit erschwert wird, eine Zuordnung der Gruppenfahrtkennung K zum Gruppenfahrtteilnehmer TV, TNⱼ, TNₖ zu erlangen.

Ein mögliches Einsatzszenario ist eine spontane Gruppenfahrt GF (beispielsweise zu einem Restaurant), bei der die Anzahl der Gruppenfahrtteilnehmer TV, TNⱼ, TNₖ die Anzahl der in einem Fahrzeug verfügbaren Plätze überschreitet und der vorausfahrende Gruppenfahrtteilnehmer TV die genaue Adresse vom Zielort nicht kennt. Dabei soll vermieden werden, dass die nachfolgenden Gruppenfahrtteilnehmer TNⱼ, TNₖ auf Sichtkontakt zum vorausfahrenden Fahrzeug angewiesen sind und dem vorausfahrenden Fahrzeug nach einem Verlust des Sichtkontaktes nicht mehr folgen können. Eine ausschließliche Orientierung anhand des Sichtkontaktes führt zu unnötiger Ablenkung des nachfolgenden Gruppenfahrtteilnehmers TNⱼ, TNₖ vom Straßenverkehr und beeinträchtigt die Straßenverkehrssicherheit, da der nachfolgende Gruppenfahrtteilnehmer TNⱼ, TNₖ den Sichtkontakt aufrecht erhalten muss, um dem vorausfahrenden Gruppenfahrtteilnehmer TV folgen zu können. Entsprechendes gilt auch für den vorausfahrenden Gruppenfahrtteilnehmer TV, sofern dieser Rücksicht auf den nachfolgenden Gruppenfahrtteilnehmer TNⱼ, TNₖ nehmen will. Bei Verlust des Sichtkontakts kann eine Nutzung eines Mobilfunkdienstes notwendig werden. Die dann notwendige fernmündliche Navigation zum Zielort ist oftmals nur über ungenaue Navigationsangaben möglich und mit erheblichem Aufwand verbunden, der die Gruppenfahrtteilnehmer TV, TNⱼ, TNₖ zusätzlich vom Straßenverkehr ablenkt. Im schlimmsten Fall kann die Ablenkung zu einem Verkehrsunfall führen.

Weitere denkbare Szenarien umfassen eine gemeinsame Stadttour mit mehreren Fahrzeugen ohne ein bestimmtes Endziel oder eine gemeinsame Fahrt über längere Strecken wie Urlaubsreisen. Dabei kann es sein, dass für das Fahrtziel keine Adresse verfügbar ist und nur über geographische Koordinaten referenziert werden kann, wie beispielsweise ein Badesee oder eine Sehenswürdigkeit.

Das vorgeschlagene Verfahren 100 weist folgende Vorteile auf:
Einfachheit der Anwendung: Im Gegensatz zu bestehenden Diensten wie Google Latitude ist weder eine vorherige Anmeldung auf einem Onlineportal notwendig, noch muss anderen die Berechtigung gegeben werden, seinen aktuellen Standort einsehen zu dürfen.

Einsatz im Konvoi: Mit dem vorgeschlagenen Verfahren ist nicht nur das Einsehen des aktuellen Standorts des vorausfahrenden Gruppenfahrtteilnehmers möglich, sondern auch die vom vorausfahrenden Gruppenfahrtteilnehmer gefahrene Fahrtroute. Somit lässt sich genau die gleiche Strecke nachfahren.

Sicherheit: Eine Erkennung des vorausfahrenden Fahrzeugs von der Ferne aus ist bei diesem Verfahren 100 nur schwer möglich, weil keine Zuordnung der Gruppenfahrtkennung K zu einem Autokennzeichen erfolgt. Außerdem kann dafür gesorgt werden, dass die Gruppenfahrtkennung K nur für eine Gruppenfahrt GF verwendet wird oder verwendet werden kann, um damit Informationen aus der Verteileinheit V zu beziehen. Somit können zwar unter Umständen Bewegungsprofile von einem Angreifer ausgelesen werden, um welches Fahrzeug es sich hierbei jedoch handelt, ist damit nicht klar.

Beliebige technologische Unterstützung: Durch die Einfachheit des Verfahrens 100 ist es möglich, das Verfahren 100 in einer *Headunit* eines Fahrzeugs oder in einem Smartphone auszuführen. Außerdem kann die Übergabe der Gruppenfahrtkennung K mündlich, schriftlich oder aber auch über zweidimensionale Codes, kontaktlose Übertragungsmedien oder ähnliche Technologien erfolgen.

## Patentansprüche

1. Verfahren (100) zum Durchführen einer Gruppenfahrt (GF), in welcher ein nachfolgender Gruppenfahrtteilnehmer (TNⱼ, TNₖ) einem vorausfahrenden Gruppenfahrtteilnehmer (TV) folgt oder ein aktuelles Fahrtziel (Z(TV)) des vorausfahrenden Gruppenfahrtteilnehmers (TV) ansteuert, wobei das Verfahren (100) folgende Schritte umfasst:
- Vergeben (110) einer Gruppenfahrtkennung (K) für eine Fahrt (GF) des vorausfahrenden Gruppenfahrtteilnehmers (TV);
- Übergeben (120) der Gruppenfahrtkennung (K) von dem vorausfahrenden Gruppenfahrtteilnehmer (TV) an den nachfolgenden Gruppenfahrtteilnehmer (TNⱼ, TNₖ) vor einem Übermitteln (130) einer Navigationsinformation (N) des vorausfahrenden Gruppenfahrtteilnehmers (TV) an eine Verteileinheit (V);
- Übermitteln (130) der Navigationsinformation (N) des vorausfahrenden Gruppenfahrtteilnehmers (TV) an die Verteileinheit (V) in einem Kontext zu der Gruppenfahrtkennung (K), wobei die Gruppenfahrtkennung (K) beim Übermitteln (130) der Navigationsinformation (N) an die Verteileinheit (V) mitübermittelt wird, ohne dass die Verteileinheit (V) außer der Gruppenfahrtkennung (K) eine Identität des vorausfahrenden Gruppenfahrtteilnehmers (TV) erhält;
- Übermitteln (150) der Navigationsinformation (N) von der Verteileinheit (V) an den nachfolgenden Gruppenfahrtteilnehmer (TNⱼ, TNₖ);
- Nutzen (160) der übermittelten Navigationsinformation (N) durch den nachfolgenden Gruppenfahrtteilnehmer (TNⱼ, TNₖ).

2. Verfahren (100) nach Anspruch 1, **dadurch gekennzeichnet, dass** das Übermitteln (150) der Navigationsinformation (N) von der Verteileinheit (V) an den nachfolgenden Gruppenfahrtteilnehmer (TNⱼ, TNₖ) nur stattfindet, wenn zuvor folgender Schritt stattgefunden hat: Übermitteln (140) der Gruppenfahrtkennung (K) durch den nachfolgenden Gruppenfahrtteilnehmer (TNⱼ, TNₖ) an die Verteileinheit (V).

3. Verfahren (100) nach Anspruch 1 oder 2, **dadurch gekennzeichnet, dass** die Navigationsinformation (N) mindestens eine Startposition P(TV) und/oder mindestens eine aktuelle Position (P'(TV)) und/oder mindestens ein aktuelles Fahrtziel (ZA) und/oder eine aktuelle Fahrtroute (FR(TV)) des vorausfahrenden Gruppenfahrtteilnehmers (TV) umfasst.

4. Verfahren (100) nach einem der Ansprüche 1 bis 3, **dadurch gekennzeichnet, dass** der vorausfahrende Gruppenfahrtteilnehmer (TV) die Gruppenfahrtkennung (K) auf einem anderen Übertragungsweg an den nachfolgenden Gruppenfahrtteilnehmer (TNⱼ, TNₖ) übermittelt als die Navigationsinformation (N).

5. Verfahren (100) nach einem der Ansprüche 1 bis 4, **dadurch gekennzeichnet, dass** der vorausfahrende Gruppenfahrtteilnehmer (TV) die Gruppenfahrtkennung (K) für die Gruppenfahrt aus einer Grundmenge von möglichen Gruppenfahrtkennungen selbst festlegen kann.

6. Verfahren (100) nach einem der Ansprüche 1 bis 5, **dadurch gekennzeichnet, dass** mittels eines Registers (R) für Gruppenfahrtkennungen und/oder mittels einer Vergaberegel dafür gesorgt wird, dass eine einmal festgelegte Gruppenfahrtkennung (K) zumindest bis zum Ablauf einer vorbestimmten Schutzzeit zumindest mit hoher Wahrscheinlichkeit keiner anderen Gruppenfahrt irgendeines Verkehrsteilnehmers zugeordnet wird.

7. Verfahren (100) nach Anspruch 6, **dadurch gekennzeichnet, dass** das Register (R) dazu vorbereitet ist, auf eine Anfrage des vorausfahrenden Gruppenfahrtteilnehmers (TV) für dessen Gruppenfahrt (GF) eine Gruppenfahrtkennung (K) zu vergeben und die vergebene Gruppenfahrtkennung (K) an den vorausfahrenden Gruppenfahrtteilnehmer (TV) zu übermitteln.

8. Verfahren (100) nach einem der Ansprüche 1 bis 7, **dadurch gekennzeichnet, dass** die Navigationsinformation (N) und/oder die Gruppenfahrtkennung (K) von oder zu einem Gruppenfahrtteilnehmer (TV, TNⱼ, TNₖ) nicht zusammen mit einem Bestandteil eines Fahrzeugkennzeichens übermittelt wird und/oder nicht zusammen mit einer Ortsangabe übermittelt wird.

9. System,
**dadurch gekennzeichnet, dass**
das System dazu vorbereitet ist, Verfahrensschritte des Verfahrens nach einem der Ansprüche 1 bis 8 auf der Seite des vorausfahrenden Gruppenfahrtteilnehmers (TV) und/oder auf der Seite des nachfolgenden Gruppenfahrtteilnehmers (TNⱼ, TNₖ) und/oder als Verteileinheit (V) und/oder als Register (R) durchzuführen.

10. Fahrzeug,
**dadurch gekennzeichnet, dass**
das Fahrzeug ein System nach Anspruch 9 umfasst.

## Claims

1. Method (100) for conducting group travel (GF), wherein a subsequent group travel participant (TNⱼ, TNₖ) follows a group travel participant (TV) travelling ahead or drives to a current destination (Z(TV)) of the group travel participant (TV) travelling ahead, wherein the method (100) comprises the following steps:
- assigning (110) a group travel identifier (K) for a journey (GF) of the group travel participant (TV) travelling ahead;
- passing on (120) the group travel identifier (K) from the group travel participant (TV) travelling ahead to the subsequent group travel participant (TNⱼ, TNₖ) before transmitting (130) navigation information (N) of the group travel participant (TV) travelling ahead to a distribution unit (V);
- transmitting (130) the navigation information (N) of the group travel participant (TV) travelling ahead to the distribution unit (V) in a context with the group travel identifier (K), wherein, when the navigation information (N) is transmitted (130) to the distribution unit (V), the group travel identifier (K) is transmitted without the distribution unit (V) receiving an identity of the group travel participant (TV) travelling ahead other than the group travel identifier (K);
- transmitting (150) the navigation information (N) from the distribution unit (V) to the subsequent group travel participant (TNⱼ, TNₖ);
- using (160) the transmitted navigation information (N) by the subsequent group travel participant (TNⱼ, TNₖ).

2. Method (100) according to claim 1, **characterised in that** the navigation information (N) is transmitted (150) from the distribution unit (V) to the subsequent group travel participant (TNⱼ, TNₖ) only after the following step has been carried out: transmitting (140) the group travel identifier (K) by the subsequent group travel participant (TNⱼ, TNₖ) to the distribution unit (V).

3. Method (100) according to claim 1 or 2, **characterised in that** the navigation information (N) comprises at least one start location P(TV) and/or at least one current location (P'(TV) and/or at least one current destination (ZA) and/or one current route (FR(TV)) of the group travel participant (TV) travelling ahead.

4. Method (100) according to any of claims 1 to 3, **characterised in that** the group travel participant (TV) travelling ahead transmits the group travel identifier (K) to the subsequent group travel participant (TNⱼ, TNₖ) on a transmission path that is different from a transmission path via which the navigation information (N) is transmitted.

5. Method (100) according to any of claims 1 to 4, **characterised in that** the group travel participant (TV) travelling ahead can select the group travel identifier (K) for the group travel from a basic set of possible group travel identifiers.

6. Method (100) according to any of claims 1 to 5, **characterised in that** a registry (R) for group travel identifiers and/or an allocation rule ensures at least with a high probability that a once specified group travel identifier (K) is not assigned to another group travel of another road user at least until a predetermined protected period has expired.

7. Method (100) according to claim 6, **characterised in that** the registry (R) is configured to assign, in response to a query from the group travel participant (TV) travelling ahead, a group travel identifier (K) for a group travel (GF) of the group travel participant travelling ahead and to transmit the assigned group travel identifier (K) to the group travel participant (TV) travelling ahead.

8. Method (100) according to any of claims 1 to 7, **characterised in that** the navigation information (N) and/or the group travel identifier (K) is not transmitted from or to a group travel participant (TV; TNⱼ, TNₖ) together with a part of a vehicle license plate and/or together with a location information.

9. System,
**characterised in that**
the system is configured to carry out method steps of the method according to any of claims 1 to 8 on the side of the group travel participant (TV) travelling ahead and/or on the side of the subsequent group travel participant (TNⱼ, TNₖ) and/or as distribution unit (V) and/or as registry (R).

10. Vehicle,
**characterised in that** the vehicle comprises a system according to claim 9.

## Revendications

1. Procédé (100) de mise en oeuvre d'un voyage en groupe (GF) dans lequel un usager de voyage en groupe qui suit (TNⱼ, TNₖ) suit un usager de voyage en groupe qui précède (TV) ou commande une destination de voyage (Z(TV)) actuelle de l'usager de voyage en groupe qui précède (TV),
lequel procédé (100) comprend les étapes suivantes :
- attribution (110) d'un identificateur de voyage en groupe (K) pour un voyage (GF) de l'usager de voyage en groupe qui précède (TV) ;
- transfert (120) de l'identificateur de voyage en groupe (K) de l'usager de voyage en groupe qui précède (TV) à l'usager de voyage en groupe qui suit (TNⱼ, TNₖ) avant une transmission (130) d'une information de navigation (N) de l'usager de voyage en groupe qui précède (TV) à une unité de répartition (V) ;
- transmission (130) de l'information de navigation (N) de l'usager de voyage en groupe qui précède (TV) à l'unité de répartition (V) dans un contexte concernant l'identificateur de voyage en groupe (K), lequel identificateur de voyage en groupe (K) est transmis en même temps lors de la transmission (130) de l'information de navigation (N) à l'unité de répartition (V) sans que l'unité de répartition (V) reçoive hormis l'identificateur de voyage en groupe (K) une identité de l'usager de voyage en groupe qui précède (TV) ;
- transmission (150) de l'information de navigation (N) de l'unité de répartition (V) à l'usager de voyage en groupe qui suit (TNⱼ, TNₖ) ;
- utilisation (160) de l'information de navigation transmise (N) par l'usager de voyage en groupe qui suit (TNⱼ, TNₖ).

2. Procédé (100) selon la revendication 1, **caractérisé en ce que** la transmission (150) de l'information de navigation (N) de l'unité de répartition (V) à l'usager de voyage en groupe qui suit (TNⱼ, TNₖ) n'a lieu que si l'étape suivante a préalablement eu lieu : transmission (140) de l'identificateur de voyage en groupe (K) par l'usager de voyage en groupe qui suit (TNⱼ, TNₖ) à l'unité de répartition (V).

3. Procédé (100) selon la revendication 1 ou 2, **caractérisé en ce que** l'information de navigation (N) comprend au moins une position de départ P(TV) et/ou au moins une position actuelle (P'(TV)) et/ou au moins une destination de voyage actuelle (ZA) et/ou un itinéraire de voyage actuel (FR(TV)) de l'usager de voyage en groupe qui précède (TV).

4. Procédé (100) selon l'une quelconque des revendications 1 à 3, **caractérisé en ce que** l'usager de voyage en groupe qui précède (TV) transmet l'identificateur de voyage en groupe (K) à l'usager de voyage en groupe qui suit (TNⱼ, TNₖ) sur un autre moyen de transmission que l'information de navigation (N).

5. Procédé (100) selon l'une quelconque des revendications 1 à 4, **caractérisé en ce que** l'usager de voyage en groupe qui précède (TV) peut spécifier lui-même l'identificateur de voyage en groupe (K) pour le voyage en groupe à partir d'un ensemble de base d'identificateurs de voyage en groupe possibles.

6. Procédé (100) selon l'une quelconque des revendications 1 à 5, **caractérisé en ce que**, au moyen d'un registre (R) destiné à des identificateurs de voyage en groupe et/ou au moyen d'une règle d'attribution, on s'assure qu'un identificateur de voyage en groupe (K) une fois spécifié n'est associé, au moins jusqu'à l'expiration d'un temps de protection prédéterminé et au moins avec une probabilité élevée, à aucun autre voyage en groupe d'un quelconque usager de la route.

7. Procédé (100) selon la revendication 6, **caractérisé en ce que** le registre (R) est conçu pour, à une demande de l'usager de voyage en groupe qui précède (TV), attribuer au voyage en groupe (GF) de celui-ci un identificateur de voyage en groupe (K) et transmettre l'identificateur de voyage en groupe attribué (K) à l'usager de voyage en groupe qui précède (TV).

8. Procédé (100) selon l'une quelconque des revendications 1 à 7, **caractérisé en ce que** l'information de navigation (N) et/ou l'identificateur de voyage en groupe (K) n'est pas transmis, par ou à un usager de voyage en groupe (TV, TNⱼ, TNₖ), en même temps qu'une partie d'un identificateur de véhicule et/ou en même temps qu'une indication de lieu.

9. Système, **caractérisé en ce que** le système est conçu pour mettre en oeuvre des étapes de procédé du procédé selon l'une quelconque des revendications 1 à 8 du côté de l'usager de voyage en groupe qui précède (TV) et/ou du côté de l'usager de voyage en groupe qui suit (TNⱼ, TNₖ) et/ou comme unité de répartition (V) et/ou comme registre (R).

10. Véhicule, **caractérisé en ce que** le véhicule comprend un système selon la revendication 9.
